**Europäisches Patentamt**

**European Patent Office**

**Office européen des brevets**

(11) Veröffentlichungsnummer: **0 485 738 B1**

# EUROPÄISCHE PATENTSCHRIFT

(45) Veröffentlichungstag der Patentschrift: **18.10.95**

(21) Anmeldenummer: **91117191.6**

(22) Anmeldetag: **09.10.91**

(51) Int. Cl.⁶: **B60T 7/20**, B60T 13/66

(54) Verfahren zur Bestimmung eines momentan optimalen Druckes der Bremsen eines mit einem Zugfahrzeug verbundenen Anhängers oder Aufliegers.

(30) Priorität: **10.11.90 DE 4035805**

(43) Veröffentlichungstag der Anmeldung:
**20.05.92 Patentblatt 92/21**

(45) Bekanntmachung des Hinweises auf die
Patenterteilung:
**18.10.95 Patentblatt 95/42**

(84) Benannte Vertragsstaaten:
**ES FR GB IT NL SE**

(56) Entgegenhaltungen:
**EP-A- 0 205 277**
**EP-A- 0 370 671**
**EP-A- 0 378 811**
**WO-A-90/02675**

(73) Patentinhaber: **MERCEDES-BENZ AG**
**Mercedesstrasse 136**
**D-70327 Stuttgart (DE)**

(72) Erfinder: **Götz, Jürgen, Dipl.-Ing.**
**Habichtweg 6**
**W-7073 Lorch (DE)**
Erfinder: **Woll, Peter, Dipl.-Ing.**
**Durlacher Strasse 97**
**W-7520 Bruchsal (DE)**
Erfinder: **Horwath, Jochen, Dipl.-Ing.**
**Greutweg 44**
**W-7441 Unterensingen (DE)**

**Beschreibung**

Die Erfindung betrifft ein Verfahren zur Bestimmung eines momentan optimalen Druckes der Bremsen eines mit einem Zugfahrzeug verbundenen Anhängers oder Aufliegers gemäß dem Oberbegriff des Patentanspruchs 1.

Die **EP 378 811 A1** beschreibt eine Druckluftbremseinrichtung für Kraftfahrzeuge, die mit einer Betriebsbremse auf dem Zugwagen und einer 2-Leitungs-Bremsanlage zur Versorgung und Ansteuerung einer Anhängerbremse ausgerüstet ist. Dabei wird zur Abstimmung der Bremswirkung zwischen Zugwagen und Anhänger mittels eines Sensors die zwischen Zugwagen und Anhänger auftretende Koppelkraft gemessen und nach Maßgabe durch das Meßergebnis ein Korrekturventil angesteuert, das an die Anhängervorratsleitung angeschlossen ist. Dabei ist eine "lernende Regelung" vorgesehen dergestalt, daß beim ersten Bremsen der Drucksollwert am Ausgang des Betriebsbremsventils und der Druckistwert am Steuerkupplungskopf bei verschwindender Koppelkraft gemessen bzw. der Steuerdruck in der Anhängerbremsleitung bis zum Verschwinden der Koppelkraft erhöht wird und aus der Differenz dieser beiden Drücke als Maß für die notwendige Druckkorrektur ein Bremsdruckkorrekturwert gebildet wird. Dieser Wert wird gespeichert und bei der jeweils nächsten Bremsung wird als Sollbremsdruck ein gemäß diesem Wert modifizierter Solldruck in die Anhängerbremsleitung eingesteuert. Es ist eine Aktualisierung besagten Korrekturfaktors vorgesehen dergestalt, daß sich der Lernvorgang bei jeder vorkommenden Bremsung wiederholt, so daß eine allmähliche Anpassung des Bremsdruckkorrekturwertes an die Fahrzeugverhältnisse stattfindet.

Hinweise, wie besagter Bremsdruckkorrekturwert gewonnen werden könnte, enthält jene Schrift nicht. Jene Art der Gewinnung eines Korrekturfaktors ist auch nicht anwendbar bei Zugfahrzeug-Sattelauflieger-Kombinationen, bei denen die Koppelkraft gar nicht oder nur unter ganz besonderen Bedingungen verschwinden kann bzw. darf. Ein wesentlicher Nachteil der vorgenannten Einrichtung kann des weiteren darin gesehen werden, daß eine Optimierung des Bremsdruckes für den Anhänger bzw. Auflieger jeweils sehr unterschiedlich lange dauern kann, weil infolge der Auswertung aller Bremsvorgänge zwecks Anpassung des Korrekturfaktors die natürliche Streubreite der insbesondere zu Beginn einer Fahrt sehr unterschiedlich anfallenden Bremsweisen eine nur schleppende, unter bestimmten Bedingungen sogar immer wieder "ausreißende" Optimierung dieses Korrekturfaktors zur Folge haben kann.

Aus der **DT 21 64 325 B2** ist des weiteren ein Verfahren bekannt, wonach der Bremsmitteldruck an den Rädern eines Kraftfahrzeug-Anhängers in Abhängigkeit von der Koppelkraft zwischen dem Zugfahrzeug und dem Anhänger geregelt wird. Dabei wird der Bremsmitteldruck so geregelt, daß die Koppelkraft verschwindet bzw. möglichst gering wird, wobei berücksichtigt wird, ob der Bremsvorgang stabil oder instabil ist, d.h. ob im Falle des Auftretens einer positiven Koppelkraft bei einer Erhöhung des Bremsmitteldruckes eine größere Verzögerung des Anhängers erfolgt und somit die Koppelkraft kleiner wird oder ob bei einer Erhöhung des Bremsmitteldruckes die Räder des Anhängers blockieren und somit die Koppelkraft weiter zunimmt.

Bei diesem bekannten Verfahren könnte als nachteilig angesehen werden, daß erst beim Auftreten einer Koppelkraft der Bremsdruck auf einen angepaßten Wert eingestellt wird, wodurch u.U. der Fahrkomfort während des Bremsvorganges beeinträchtigt werden könnte.

Die **EP 370 671 A2** beschreibt ein Bremssystem für Zugfahrzeuge für herkömmliche Sattelauflieger, bei dem ebenfalls die Koppelkraft zwischen Zugfahrzeug und Auflieger erfaßt wird. Dabei sind für die Abbremsung sowohl des Zugfahrzeugs als auch des Aufliegers getrennte adaptive Regelkreise vorgesehen, wobei der Regelkreis für die Abbremsung des Zugfahrzeugs nach Maßgabe durch den Vergleichsfehler zwischen Zugwagenverzögerung und Abbremsungswunsch des Fahrers reagiert und der Regelkreis für die Abbremsung des Aufliegers auf der Basis der sensierbaren Koppelkraft reagiert. Auch hier ist, ausgehend von einem festliegenden Standardwert, eine Adaption eines den Bremsanforderungsdruck für den Auflieger modifizierenden Korrekturfaktors über eine Reihe von aufeinanderfolgenden Abbremsungen vorgesehen.

Es ist Aufgabe der Erfindung, ein Verfahren zur Bestimmung eines momentan optimalen Druckes der Bremsen eines mit einem Zugfahrzeug verbundenen Anhängers oder Sattelaufliegers vorzuschlagen, welches das der eingangs genannten Einrichtung innewohnende Verfahren so verbessert, daß eine Bremsdruckoptimierung sowie ein nicht auf Null zu beschränkender, insoweit also vorgebbarer Wert der Koppelkraft erheblich schneller erreicht werden können.

Diese Aufgabe wird bei einem gattungsgemäßen Verfahren zur Bestimmung eines momentan optimalen Druckes der Bremsen eines mit einem Zugfahrzeug verbundenen Anhängers oder Aufliegers erfindungsgemäß mit den kennzeichnenden Merkmalen des Anspruchs 1 gelöst, wobei die Merkmale der Unteransprüche vorteilhafte Aus- und Weiterbildungen kennzeichnen.

2

Ein wesentlicher Vorteil der Erfindung gegenüber dem bekannten Stand der Technik besteht darin, daß unabhängig von momentan wirksamen Fahrverhältnissen der Sollwert der Koppelkraft bei Anwendung des erfindungsgemäßen Verfahrens sehr schnell erreicht werden kann und dabei ein hoher Fahrkomfort bei gleichzeitig großer Fahrsicherheit während des Bremsvorganges erzielt wird.

Bei dem erfindungsgemäßen Verfahren zur Bestimmung eines momentan optimalen Bremsdruckes für einen mit einem Zugfahrzeug verbundenen Anhänger oder Auflieger wird ein erster Wert für einen momentan optimalen Bremsdruck abgeleitet, indem der momentanen Stellung des Bremswertgebers (Bremspedales) ein aus früheren stationären Bremsvorgängen abgeleiteter Wert des Bremsdruckes des Anhängers bzw. Aufliegers zugeordnet wird. Dadurch ist es möglich, sich ergebende Unterschiede der einzelnen Bremsanlagen zu berücksichtigen, die in unterschiedlichen Auslegungen der Bremsanlagen von Zugfahrzeug und Anhänger bzw. Auflieger oder in unterschiedlichen Zuständen bzgl. der Alterung begründet sein können.

Dabei wird ein stationärer Bremsvorgang aus der Bedingung abgeleitet, daß die Koppelkraft über einen längeren Zeitraum gleich Null bzw. gleich dem Sollwert der Koppelkraft ist, wobei Abweichungen innerhalb eines vorgegeben Schwellwertes, der sich beispielsweise aus den Meßungenauigkeiten ergibt, ebenfalls als stationärer Bremsvorgang erkannt werden. Dieser längere Zeitraum kann dabei insbesondere in der Größenordnung von ca. 0,5 s liegen. Ein Sollwert der Koppelkraft ungleich 0 kann vorteilhaft dann verwendet werden, wenn es sich bei dem Anhänger um einen Zentralachsanhänger handelt. Bei einem solchen Lastzug muß ein der Stützkraft auf das Zugfahrzeug entsprechender Bremskraftanteil für den Anhänger vom Zugfahrzeug übernommen werden. In gleicher Weise kann das Verfahren auch für Sattelzüge verwendet werden. Im folgenden wird in der Beschreibung nur noch allgemein der Begriff "Anhänger" verwendet, wobei allerdings alle hier aufgezeigten Möglichkeiten der Zusammenstellung eines Lastzuges gemeint sind.

In vorteilhafter Weise werden sowohl Änderungen der Konstellation (d.h. ein Wechsel des an das Zugfahrzeug angehängten Anhängers) des Zugfahrzeug-Anhänger-Gespannes sowie Änderungen der Beladung des Zugfahrzeug-Anhänger-Gespannes berücksichtigt, indem bei Änderungen der Konstellation und/oder Änderungen der Beladung ein Reset der gespeicherten Zuordnungen erfolgt. Änderungen der Konstellation des Zugfahrzeug-Anhänger-Gespannes sowie Änderungen der Beladung können dabei beispielsweise aus einer längeren Standzeit oder einem Motorstillstand abgeleitet werden. Die Zeitdauer dieses längeren Stillstandes kann dabei beispielsweise auf 2 Minuten festgelegt sein.

Nachdem sich der der momentanen Stellung des Bremswertgebers zugeordnete Bremsdruck des Anhängers eingestellt hat, kann dann zusätzlich eine Regelung dieses Bremsdruckes dahin gehend erfolgen, daß die zwischen dem Zugfahrzeug und dem Anhänger bestehende Koppelkraft ihren Sollwert erreicht.

In diesem Fall kann dann die Zuordnung der Stellung des Bremswertgebers zu dem Bremsdruck des Anhängers als Zuordnung für einen bei einer bestimmten Stellung des Bremswertgebers anzusteuernden Bremsdruck verwendet werden, wenn diese Regelung wiederum dazu führte, daß ein stationärer Bremsvorgang vorliegt.

Im folgenden werden für die Drucke im Bremssystem verschiedene Indizierungen verwendet. Die Druckbezeichnung $p_{ALB}$ bezeichnet den Druck vor dem automatisch lastabhängigen Bremskraft-Ventil (ALB-Ventil) des Zugfahrzeuges und die Druckbezeichnung $p_{KKB}$ bezeichnet den Druck am Kupplungskopf Bremse zwischen dem Zugfahrzeug und dem Anhänger und bezeichnet somit den Bremsdruck des Anhängers.

Ein Ausführungsbeispiel der Erfindung ist in der Zeichnung schematisch dargestellt und wird im folgenden näher beschrieben. Es zeigen:

Fig. 1: ein Ablaufdiagramm eines erfindungsgemäßen Verfahrens zur Bestimmung eines momentan optimalen Druckes $p_{KKB}$ der Bremsen eines mit einem Zugfahrzeug verbundenen Anhängers,

Fig. 2: den qualitativen Verlauf der Abbremsung z in Abhängigkeit der Drucke $p_{ALB}$ und $p_{KKB}$,

Fig. 3: die graphische Darstellung einer Anpassung des Bremsverhaltens des Anhängers an das Bremsverhalten des Zugfahrzeuges,

Fig. 4: eine graphische Darstellung der Zuordnung des Druckes $p_{KKB}$ zu dem Druck $p_L$, der durch die Stellung $s_{BWG}$ des Bremswertgebers gegeben ist,

Fig. 5: ein numerisch verbessertes Verfahren zur rechnerischen Bestimmung der graphischen Darstellung der Fig. 4,

Fig. 6: ein Ablaufdiagramm betreffend die Regelung der Koppelkraft $F_{Kop}$ und

Fig. 7: ein System-Blockschaltbild der Steuerung und der Regelung im Zusammenspiel in Verbindung mit dem Zugfahrzeug und dem Anhänger.

3

EP 0 485 738 B1

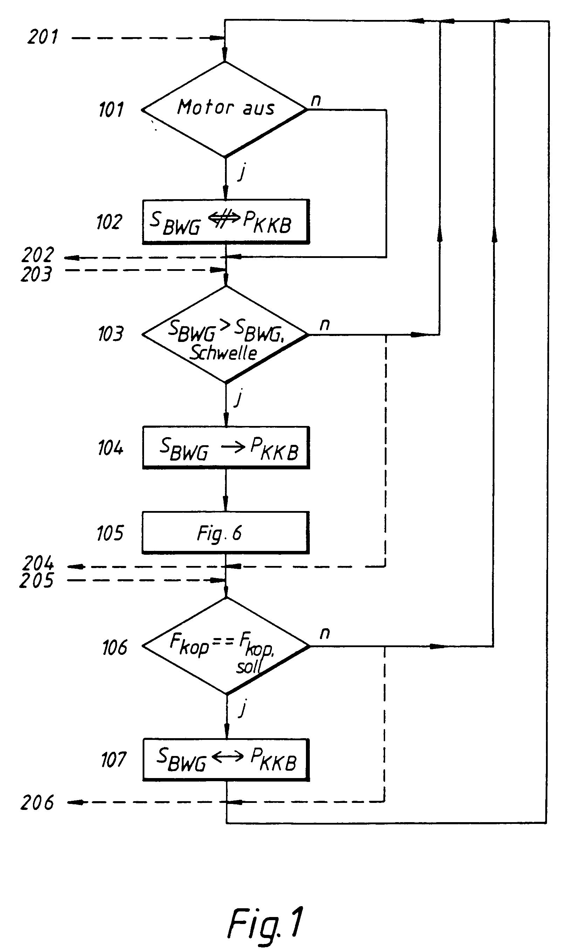

Fig. 1 zeigt ein Ablaufdiagramm eines erfindungsgemäßen Verfahrens, bei dem zunächst in dem Schritt 101 geprüft wird, ob die Bedingung erfüllt ist, daß die gespeicherten Zuordnungen der Stellung des Bremswertgebers $s_{BWG}$ zu dem eingestellten Druck $p_{KKB}$ generell zurückgesetzt werden müssen, weil sich die Beladung und/oder Konstellation des aus einem Zugfahrzeug und einem Anhänger bestehenden Lastzuges möglicherweise geändert hat. In dem Ausführungsbeispiel nach Fig. 1 ist diese Prüfung dadurch realisiert, daß geprüft wird, ob der Motor aus ist. In diesem Fall erfolgt ein Übergang zu dem Schritt 102, in dem ein Reset aller gespeicherter Zuordnungen der Stellung des Bremswertgebers $s_{BWG}$ zu dem eingestellten Druck $p_{KKB}$ erfolgt. Es gelten dann wiederum die sich aus dem bisherigen Stand der Technik ergebenden Ausgangsabstimmungen zur Zuordnung eines Druckes $p_{KKB}$ zu der Stellung $s_{BWG}$ des Bremswertgebers. Diese vorläufige Zuordnung kann beispielsweise derart sein, daß zunächst der volle Druck $p_{ALB}$ übergeben wird, so daß der Wert des Druckes $p_{KKB}$ gleich dem Wert des Druckes $p_{ALB}$ wird. Wird dann bei einem Bremsvorgang ein stationärer Zustand erreicht, kann diese vorläufige Zuordnung weiter verbessert werden, indem das sich bei diesem Bremsvorgang ergebende Verhältnis zwischen dem Druck $p_{ALB}$ und dem Druck $p_{KKB}$ bei den nächsten Bremsvorgängen verwendet wird, um einen Sollwert für den Druck $p_{KKB}$ zu bestimmen, bis das im folgenden beschriebene Verfahren zur Bestimmung eines Sollwertes für den Druck $p_{KKB}$ durchgeführt ist. Dabei kann diese vorläufige Zuordnung durch eine Mittelung über 10 Werte erfolgen.

In dem Schritt 103 erfolgt dann eine Überprüfung, ob ein Bremsvorgang vorliegt. Diese Überprüfung wird dadurch realisiert, daß festgestellt wird, ob die Stellung $s_{BWG}$ des Bremswertgebers - im Ausführungsbeispiel der Fig. 1 ein Bremspedal - oberhalb eines vorgegebenen Schwellwertes $s_{BWG,Schwelle}$ liegt. In dem Ausführungsbeispiel nach Fig. 1 kann dieser Schwellwert in der Größenordnung von ca. 20% der vollen Betätigung des Bremspedals liegen. Wurde dabei festgestellt, daß ein Bremsvorgang vorliegt, wird in dem Schritt 104 ein der momentanen Stellung $s_{BWG}$ des Bremswertgebers zugeordneter Wert des Druckes $p_{KKB}$ als Sollwert vorgegeben.

Entsprechend dem Schritt 105 erfolgt zusätzlich zu dem anzusteuernden Sollwert, der entsprechend dem Schritt 104 bestimmt wurde, eine Regelung des Istwertes des Druckes $p_{KKB}$ auf einen solchen Wert, daß die Koppelkraft $F_{Kop}$ zwischen dem Zugfahrzeug und dem Anhänger gleich dem für diese Koppelkraft $F_{Kop}$ vorgegebenen Sollwert $F_{Kop,soll}$ ist.

In dem Schritt 106 wird dann geprüft, ob der Bremsvorgang ausgeregelt ist, d.h. ob die Koppelkraft $F_{Kop}$ für eine Zeitdauer oberhalb eines vorgegebenen Schwellwertes, der beispielsweise gleich 0,5 s sein kann, gleich dem Sollwert $F_{Kop,soll}$ der Koppelkraft ist. Aufgrund von Schwankungen der Meßwerte durch Meßfehler und durch Störungen durch Fahrbahnunebenheiten kann es zu Ungenauigkeiten kommen, so daß Abweichungen der Koppelkraft $F_{Kop}$ von dem Sollwert $F_{Kop,soll}$ der Koppelkraft unterhalb eines Schwellwertes, der beispielsweise in der Größenordnung von 3 kN liegen kann, so gewertet werden, daß die Koppelkraft $F_{Kop}$ gleich dem Sollwert $F_{Kop,soll}$ der Koppelkraft ist. Ist dies der Fall, wird entsprechend dem Schritt 107 die Zuordnung der Stellung $s_{BWG}$ des Bremswertgebers zu dem ausgeregelten Druck $p_{KKB}$ für die Bestimmung eines Sollwertes des Druckes $p_{KKB}$ bei künftigen Bremsvorgängen herangezogen.

Entsprechend der Darstellung der Fig. 1 ist es auch möglich, den dargestellten erfindungsgemäßen Ablauf in mehrere Teile zu unterteilen, wobei der Darstellung der Fig. 1 eine Unterteilung in drei Teile zu entnehmen ist. Dabei kann von einer zentralen Steuereinheit veranlaßt ein sich zyklisch wiederholender Ablauf jedes einzelnen der drei Teile realisiert werden, wobei dann auch unterschiedliche Zykluszeiten für die drei Teile möglich sind.

So können beispielsweise die Schritte 101 und 102 zusammengefaßt werden, indem veranlaßt durch ein Eingangssignal 201 dieser erste Teil gestartet wird, wobei durch das Rückgabesignal 202 der Ablauf dieses ersten Teiles des erfindungsgemäßen Verfahrens wieder beendet wird. Außerdem können die Schritte 103, 104 und 105 zusammengefaßt werden, indem veranlaßt durch ein Eingangssignal 203 dieser zweite Teil gestartet wird, wobei durch das Rückgabesignal 204 der Ablauf dieses zweiten Teiles des erfindungsgemäßen Verfahrens wieder beendet wird. Es werden dann außerdem die Schritte 106 und 107 zusammengefaßt, indem veranlaßt durch ein Eingangssignal 205 dieser dritte Teil gestartet wird, wobei durch das Rückgabesignal 206 der Ablauf dieses dritten Teiles des erfindungsgemäßen Verfahrens wieder beendet wird.

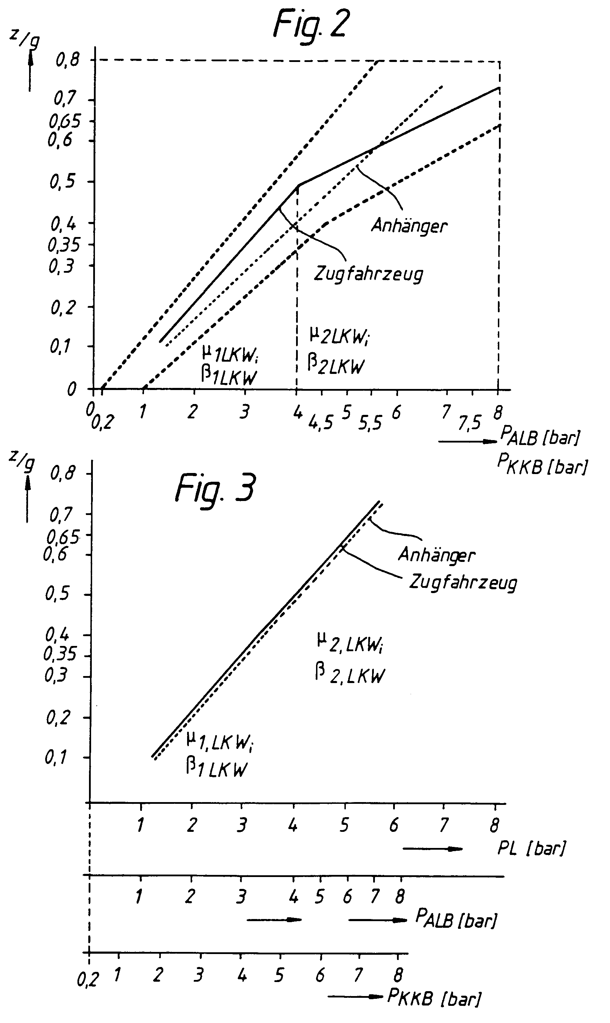

Fig. 2 zeigt den qualitativen Verlauf der Abbremsung z in Einheiten der Erdbeschleunigung g für ein Zugfahrzeug sowie einen Anhänger in Abhängigkeit von dem jeweiligen Druck $p_{ALB}$ und $p_{KKB}$. Der das Zugfahrzeug betreffenden Kurve der Fig. 2 ist bei einem Druck $p_{ALB}$ von 4 bar zu entnehmen, daß das ALB-Ventil bei diesem Wert des Druckes $p_{ALB}$ auf eine größere Minderung umschaltet, was durch den entsprechenden Knick dieser Kurve sichtbar wird. Demnach können die jeweiligen Abbremsungen z für das Zugfahrzeug und den Anhänger in Form folgender Gleichungen angegeben werden:
Für das Zugfahrzeug:

4

$$z_{LKW} = \mu_{1,LKW} \cdot p_{ALB} + \beta_{1,LKW} \qquad 1\ bar <= p_{ALB} <= 4\ bar , \qquad (1)$$

$$z_{LKW} = \mu_{2,LKW} \cdot p_{ALB} + \beta_{2,LKW} \qquad 4\ bar <= p_{ALB} <= p_{max} , \qquad (2)$$

Für den Anhänger:

$$z_{Anh} = \mu_{Anh} \cdot p_{KKB} + \beta_{Anh} \qquad 1\ bar <= p_{KKB} <= p_{max} . \qquad (3)$$

Dabei hat die Größe $\mu$ die Bedeutung einer Steigung der entsprechenden Geraden und die Größe $\beta$ entspricht dem jeweiligen Schnittpunkt der Geraden mit der z-Achse. Soll nun ein Sollwert $F_{Kop,soll}$ der Koppelkraft von 0 erreicht werden, bedeutet dies, daß die Abbremsungen $z_{LKW}$ und $z_{Anh}$ des Zugfahrzeuges und des Anhängers gleich sein müssen. Für die beiden Bereiche des Druckes $p_{ALB}$ kleiner und größer als 4 bar ergeben sich dann aus den Gleichungen (1) und (3) sowie (2) und (3) die Gleichungen (4) und (5), die gleich so umgestellt sind, daß unmittelbar die Abhängigkeit des Druckes $p_{KKB}$ von dem Druck $p_{ALB}$ sichtbar wird.

$$p_{KKB} = ( \mu_{1,LKW} \cdot p_{ALB} + \beta_{1,LKW} - \beta_{Anh} ) / \mu_{Anh}$$
$$0\ bar <= p_{ALB} <= 4\ bar \qquad (4)$$
$$p_{KKB} = ( \mu_{2,LKW} \cdot p_{ALB} + \beta_{2,LKW} - \beta_{Anh} ) / \mu_{Anh}$$
$$4\ bar <= p_{ALB} <= p_{max}. \qquad (5)$$

Somit zeigt sich, daß eine lineare Abhängigkeit des Druckes $p_{KKB}$ von dem Druck $p_{ALB}$ besteht, wobei der Achsenabschnitt und die Steigung dieser Geraden davon abhängen, ob der Druck $p_{ALB}$ kleiner oder größer als 4 bar ist.

Grundsätzlich ist es also möglich, für jeden der beiden Bereiche $p_{ALB} < 4$ bar und $p_{ALB} > 4$ bar aus jeweils wenigstens zwei Meßpunkten die Geradengleichungen (4) und (5) durch Bestimmung der entsprechenden Steigung und des entsprechenden Achsenabschnittes zu bestimmen. Es ergibt sich somit eine Zuordnung des Druckes $p_{ALB}$ zu dem Druck $p_{KKB}$, die einem Bremsvorgang entspricht, bei dem die Koppelkraft $F_{Kop}$ gleich 0 ist. Da andererseits die Zuordnung des Druckes $p_{ALB}$ zu der Stellung des Bremswertgebers $s_{BWG}$ bekannt ist, läßt sich somit unmittelbar eine Zuordnung der Stellung des Bremswertgebers $s_{BWG}$ zu dem Druck $p_{KKB}$ angeben, bei der die Koppelkraft $F_{Kop}$ gleich 0 wird. Es ist dann möglich, die Stellung des Bremswertgebers $s_{BWG}$ zu erfassen und entsprechend dieser Stellung entsprechend dem Schritt 104 einen anzusteuernden Wert des Druckes $p_{KKB}$ auszugeben, so daß ein sehr schneller Abbau der Koppelkraft $F_{Kop}$ gewährleistet ist.

Da die meisten Bremsvorgänge im Bereich kleiner Abbremsungen stattfinden, ist zu erwarten, daß sich nur relativ wenige Meßpunkte ergeben, mit denen eine Zuordnung der Stellung $s_{BWG}$ des Bremswertgebers zum Druck $p_{KKB}$ durchgeführt werden könnte, wenn der Druck $p_{ALB}$ größer als 4 bar ist. In einer besonders vorteilhaften Ausführungsform des erfindungsgemäßen Verfahrens kann aus der Zuordnung der Stellung $s_{BWG}$ des Bremswertgebers zum Sollwert des Druckes $p_{KKB}$ für Werte des Druckes $p_{ALB} < 4$ bar auf die Zuordnung der Stellung $s_{BWG}$ des Bremswertgebers zum Sollwert des Druckes $p_{KKB}$ für Werte des Druckes $p_{ALB} > 4$ bar geschlossen werden.

Es kann dazu beispielsweise eine Hilfsgröße des Druckes mit der Bezeichnung $p_L$ eingeführt werden, die im Bereich $0 <= p_{ALB} <= 4$ bar gleich dem Druck $p_{ALB}$ ist. Für Werte des Druckes $p_{ALB}$ größer als 4 bar ergibt sich dann eine Umrechnung der Werte des Druckes $p_{ALB}$ in zugehörige Werte des Druckes $p_L$ derart, daß mittels der Gl. (1) eine Zuordnung der Abbremsung des Zugfahrzeuges $z_{LKW}$ über dem Druck $p_L$ statt über dem Druck $p_{ALB}$ getroffen wird. Diese Zuordnung gilt dann für den gesamten Bereich des Druckes. Die Änderung der Zuordnung gemäß den anderen Parametern der Gl. (2) für Werte des Druckes $p_{ALB}$ größer als 4 bar wird dann durch die Umrechnung berücksichtigt. Gemäß dieser Anforderung ergibt sich somit folgende Umrechnung für den Druck $p_{ALB}$ in den Druck $p_L$:

$$p_L = p_{ALB} \qquad 0 <= p_{ALB} <= 4\ bar \qquad (6)$$
$$p_L = ( p_{ALB} - 4\ bar ) \cdot \mu_{2,LKW} / \mu_{1,LKW} + 4\ bar$$
$$4\ bar <= p_{ALB}. \qquad (7)$$

Gemäß Fig. 3 ergeben sich somit zwei aufeinanderliegende Geraden für die Abbremsung des Zugfahrzeuges $z_{LKW}$ aufgetragen über dem Druck $p_L$ und für die Abbremsung des Anhängers $z_{Anh}$ aufgetragen über dem Druck $p_{KKB}$, wobei sich die Stauchung sowie die Verschiebung der Achse für den Druck $p_{KKB}$ gegenüber der Achse für den Druck $p_L$ aus den in dem stationären Fall aufgenommenen Meßwerten ergibt,

5

wenn die Koppelkraft $F_{Kop}$ gleich dem Sollwert $F_{Kop,soll}$ ist.

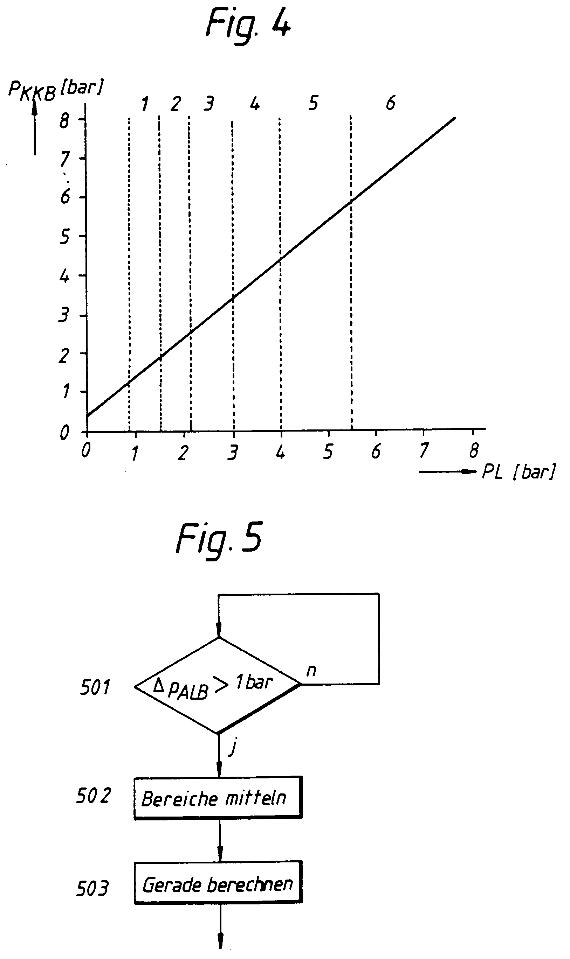

Da nun die Zuordnung der Stellung des Bremswertgebers $s_{BWG}$ zu dem Druck $p_{ALB}$ bekannt ist, kann durch eine Umstellung der Gl. (6) und (7) auch unmittelbar eine Zuordnung der Stellung des Bremswertgebers $s_{BWG}$ zu dem Druck $p_L$ angegeben werden. Werden nun bei stationären Bremsvorgängen (Koppelkraft gleich dem Sollwert) die Zuordnungen der Drucke $p_{KKB}$ zu den Drucken $p_L$ abgespeichert, kann aus diesen Zuordnungen entsprechend der beispielhaften Darstellung in Fig. 4 unmittelbar eine Geradengleichung für den Druck $p_{KKB}$ in Abhängigkeit des Druckes $p_L$ angegeben werden. Somit ist es möglich, unter Verwendung dieser Geradengleichung und der Zuordnung des Druckes $p_L$ zu der Stellung des Bremswertgebers $s_{BWG}$ eine Zuordnung der Stellung des Bremswertgebers $s_{BWG}$ zu dem Druck $p_{KKB}$ anzugeben.

Weiterhin sind den Fig. 4 und 5 einige vorteilhafte Aspekte bzgl. der Vorgehensweise der Bestimmung einer Geradengleichung des Druckes $p_{KKB}$ über dem Druck $p_L$ zu entnehmen. Um eine "hinreichende" lineare Unabhängigkeit der der Berechnung der Geradengleichung zugrundeliegenden Meßpunkte zur Vermeidung numerischer Schwierigkeiten zu gewährleisten, ist es vorteilhaft, die Berechnung der Geradengleichung entsprechend dem Schritt 503 erst dann durchzuführen, wenn wenigstens zwei Meßpunkte vorliegen, deren Werte des Druckes $p_L$ wenigstens 1 bar Differenz aufweisen. In dem Ablaufdiagramm der Fig. 5 entspricht dies dem Schritt 501. Ansonsten kann es bei der Bestimmung der Geradengleichung aufgrund von Schwankungen der Meßwerte zu numerischen Schwierigkeiten kommen. Aus demselben Grund kann in einer besonders vorteilhaften Ausführungsform des erfindungsgemäßen Verfahrens der Bereich der insgesamt auftretenden Drucke $p_L$ entsprechend dem Schritt 502 und der Darstellung der Fig. 4 in mehrere Bereiche unterteilt werden. Es wird dann zunächst für jeden dieser Bereiche eine Mittelung aller in den jeweiligen Bereichen auftretenden Meßwerte vorgenommen. Aus den gemittelten Werten dieser einzelnen Bereiche wird dann die Geradengleichung bestimmt. Es hat sich dabei als vorteilhaft erwiesen, den Bereich der auftretenden Drucke $p_L$ in 6 Bereiche zu unterteilen.

Außerdem können neuere Meßwerte bei der Mittelung eine größere Gewichtung erfahren als frühere Meßwerte. Beispielsweise kann die Mittelung der früheren Meßwerte insgesamt mit 1 gewichtet werden und der aktuelle Meßwert gegenüber der Mittelung der früheren Meßwerte mit 0,25.

Das bisher beschriebene Verfahren stellt lediglich ein Ausführungsbeispiel dar, wie eine Zuordnung der Stellung $s_{BWG}$ des Bremswertgebers zu dem Sollwert des Druckes $p_{KKB}$ erfolgen kann. Wesentlich an der Erfindung ist, daß die bei früheren stationären Bremsvorgängen ermittelten Zuordnungen bei künftigen Bremsvorgängen zur Bestimmung eines entsprechend Schritt 104 anzusteuernden Wertes des Druckes $p_{KKB}$ herangezogen werden.

So ist es beispielsweise auch möglich, mittels der Gl. (4) zunächst die Größen $\mu_{Anh}$ und $\beta_{Anh}$ zu bestimmen, wobei diese Bestimmung beispielsweise mittels der Methode der Parameteridentifikation anhand von mehreren Meßpunkten erfolgen kann. Mit den auf diese Art und Weise bestimmten Größen $\mu_{Anh}$ und $\beta_{Anh}$ kann dann auch für Werte des Druckes $p_{ALB} > 4$ bar die Gl. (5) gelöst werden.

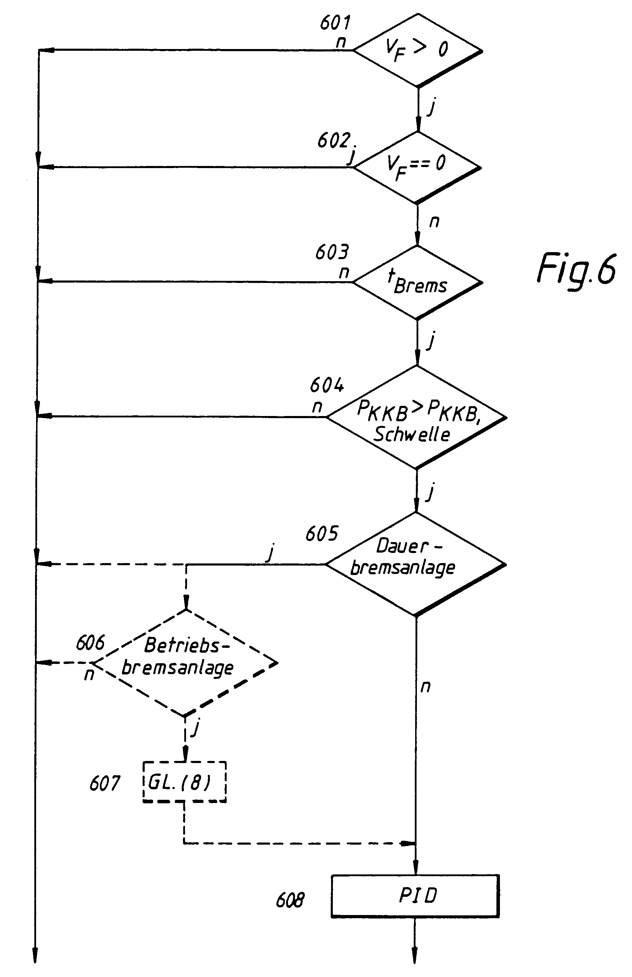

Fig. 6 ist ein Verfahrensablauf der Regelung der Koppelkraft $F_{Kop}$ zu entnehmen. Als Ausgangsgröße dieser Regelung ergibt sich ein Wert des Druckes $p_{KKB}$, der zu dem entsprechend Schritt 104 (Fig. 1) anzusteuernden Wert des Druckes $p_{KKB}$ addiert wird. Ziel dieser Regelung ist es, eventuell noch bestehende Koppelkräfte $F_{Kop}$ durch diese Regelung auf ihren Sollwert $F_{Kop,soll}$ zu bringen. Da nun aber im normalen Fahrbetrieb Situationen auftreten können, in denen Koppelkräfte auftreten, die nicht ausgeregelt werden sollen, müssen vor dem Einsatz dieser Regelung zunächst einige Kriterien überprüft werden.

So darf diese Regelung beispielsweise bei Rückwärtsfahrt nicht in Aktion treten, da bei der Rückwartsfahrt in der dann gültigen Fahrtrichtung gesehen der Anhänger vor dem Zugfahrzeug herfährt. Bremst bei einer Rückwärtsfahrt beispielsweise der Anhänger schwächer als das Zugfahrzeug, tritt eine Koppelkraft $F_{Kop} > 0$ auf. Eine solche Koppelkraft $F_{Kop}$ wird bei normaler Vorwärtsfahrt dadurch ausgeregelt, daß die Bremskraft (der Bremsdruck) des Anhängers abgeregelt wird. Im Falle der Rückwärtsfahrt würde durch eine solche Maßnahme aber die Koppelkraft $F_{Kop}$ gerade weiter erhöht. Dies wäre zu umgehen, wenn man das Vorzeichen des Istwertes der Koppelkraft bei der Regelung ändert. Andererseits kann in einer vorteilhaften Ausführungsform die Regelung bei der Rückwärtsfahrt ausgeblendet werden, da Rückwärtsfahrten im allgemeinen nur langsam durchgeführt werden und infolge dessen auch keine kritischen Fahrzustände selbst beim Auftreten von Koppelkräften auftreten können. Deswegen wird in dem Schritt 601 anhand der Fahrzeuggeschwindigkeit $v_F$ die Bedingung überprüft, ob eine Rückwärtsfahrt vorliegt. Ist dies der Fall, erfolgt keine Regelung der Koppelkraft. Andernfalls erfolgt ein Übergang zu dem Schritt 602, in dem eine weitere Prüfung stattfindet.

In dem Schritt 602 wird überprüft, ob der aus dem Zugfahrzeug und dem Anhänger bestehende Lastzug stillsteht. Beispielsweise können beim Anhalten am Berg zwischen Zugfahrzeug und Anhänger Verspannungen auftreten, die zu bleibenden Koppelkräften führen, so lange der Lastzug steht, wobei diese Koppelkräfte dann unabhängig von dem den Bremsdruck des Anhängers repräsentierenden Druck $p_{KKB}$

sind. Deshalb wird gemäß dem Schritt 602 überprüft, ob der Lastzug steht, d.h. ob die Fahrzeuggeschwindigkeit $v_F$ gleich 0 ist, wobei bei stehendem Lastzug die Koppelkraftregelung ausgeschaltet wird.

Weiterhin kann eine negative Koppelkraftspitze beim Beginn eines Bremsvorganges auftreten. Da dann durch die Regelung eine verhältnismäßig große Stellgröße ausgegeben wird, die in der Folge dann im allgemeinen zu einem Überschwingen führt, ist es vorteilhaft, die Regelung zu Beginn eines Bremsvorganges auszublenden. Deshalb wird in dem Schritt 603 überprüft, ob seit Beginn des Bremsvorganges die Zeitdauer $t_{Brems}$ vergangen ist. Diese Zeitdauer $t_{Brems}$ hängt dabei wesentlich von dem Ansprechverhalten der Bremsen des Anhängers im Verhältnis zu den Bremsen des Zugfahrzeuges ab und kann in der Größenordnung von ca. 1 s liegen. Diese Koppelkraftspitze zu Beginn eines Bremsvorganges kann auch vorteilhaft dadurch minimiert werden, daß zu Beginn eines Bremsvorganges ein Druckinshot durchgeführt wird, indem beispielsweise ein Wert des Druckes $p_{KKB}$ von ca. 3 bar für eine Zeitdauer von ca. 0,5 s angelegt wird.

Aufgrund von Ventilhysteresen und Schwankungen in der Reibung der Radbremsen ist es weiterhin vorteilhaft, die Regelung erst bei einem Druck oberhalb eines Wertes von beispielsweise $p_{KKB} > 0,5$ bar zu aktivieren, da es sonst zu Instabilitäten in der Regelung kommen kann. Bei niedrigen Bremsdrücken kommt es nur zu geringen Verzögerungen, so daß der Bremsvorgang insgesamt nicht instabil werden kann. Deswegen wird in dem Schritt 604 überprüft, ob der Druck $p_{KKB}$ einen bestimmten Schwellwert $p_{KKB,Schwelle}$ überschritten hat.

Außerdem wird in dem Schritt 605 geprüft, ob der Lastzugführer eine Dauerbremsanlage wie z.B. eine Motorbremse oder einen Retarder eingeschaltet hat. In diesem Fall kommt es zu Koppelkräften, die nicht ausgeregelt werden sollen. Bei einer Bergabfahrt könnten sich die Bremsen des Anhängers überhitzen, wenn das Zugfahrzeug mittels der Motorbremse abgebremst wird. Im Falle, daß die Dauerbremsanlage allein betätigt wird, erfolgt somit keine Regelung der Koppelkraft $F_{Kop}$.

In dem Schritt 606 wird überprüft, ob zusätzlich zur Dauerbremsanlage noch die Betriebsbremsanlage des Lastzuges betätigt wird. In diesem Fall kann entsprechend der Darstellung in dem Schritt 607 als Sollwert $F_{Kop,soll}$ der Koppelkraft eine Größe berechnet werden, die die Betätigung der Dauerbremsanlage berücksichtigt. Allgemein ergibt sich die Koppelkraft $F_{Kop}$ nach folgender Gleichung:

$$F_{Kop} = \frac{m_{Anh} * m_{LKW}}{m_{Anh} + m_{LKW}} * (z_{LKW} - z_{Anh}) \qquad . \qquad (8)$$

Darin bedeuten:

$m_{Anh}$ : Masse des Anhängers und

$m_{LKW}$ : Masse des Zugfahrzeuges.

Wenn die Masse des Zugfahrzeuges und des Anhängers sowie die sich durch das Bremsmoment der Dauerbremse, das zu einer Bremskraft am Rad führt, und der Masse des Zugfahrzeuges ergebende Verzögerung des Zugfahrzeuges bekannt sind, erhält man als Sollwert $F_{Kop,soll}$ der Koppelkraft den sich aufgrund des alleinigen Betriebes der Dauerbremsanlage ergebenden Wert der Koppelkraft $F_{Kop}$ entsprechend oben angegebener Gl. (8), indem man die Verzögerung des Anhängers gleich 0 setzt. Alternativ kann die Bestimmung der Koppelkraft $F_{Kop}$ in dem Schritt 607 auch erfolgen, indem der gemessene Wert der Koppelkraft $F_{Kop}$ beim Betrieb der Dauerbremsanlage ohne gleichzeitige Betätigung der Betriebsbremsanlage bei der Bestimmung des Sollwertes $F_{Kop,soll}$ berücksichtigt wird. Ebenso ist es auch möglich, bei Betätigung der Dauerbremsanlage unabhängig vom Betätigen der Betriebsbremsanlage die Regelung auszublenden.

Entsprechend der Darstellung in dem Schritt 608 erfolgt dann eine Regelung des Druckes $p_{KKB}$ auf einen solchen Wert, daß die Koppelkraft $F_{Kop}$ ihren Sollwert $F_{Kop,soll}$ erreicht. Diese Regelung kann dabei beispielsweise mittels eines PID-Reglers erfolgen, wobei sich zeigte, daß ein stabiles Regelverhalten erreicht wurde bei einer Abtastzeit des Reglers von ca. 50 ms und Reglerparametern, die folgende Größenordnungen annehmen können:

$$Kp = 0,06 \text{ bar/kN}$$
$$T_I = 0,73 \text{ s}$$
$$T_D = 0,19 \text{ s}.$$

Ebenso besteht grundsätzlich auch die Möglichkeit, andere Reglerarten wie z.B. einen Mehrpunktregler einzusetzen.

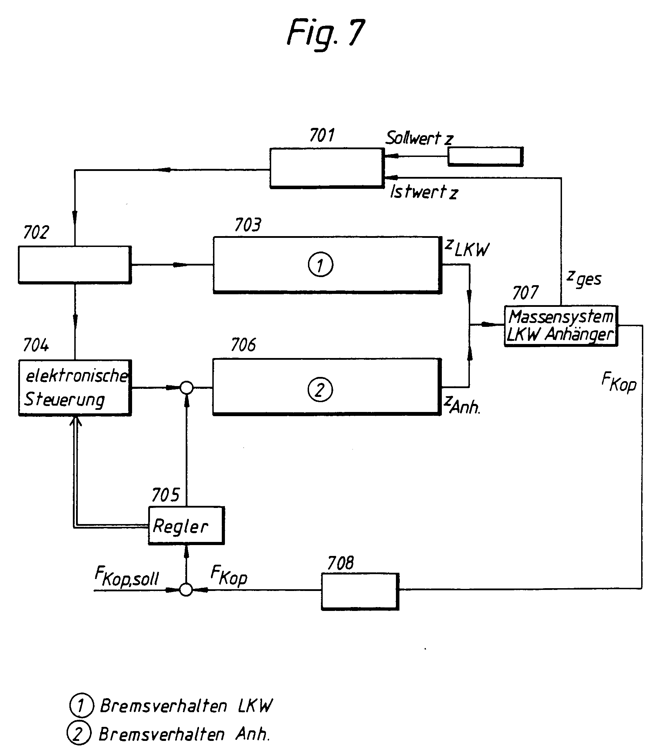

Entsprechend der Darstellung der Fig. 7 ergibt sich nun ein Funktionsblockschaltbild des erfindungsgemäßen Verfahrens. Dabei wirkt auf den Lastzugführer entsprechend dem Block 701 der spürbare Istwert der Verzögerung z ein sowie ein sich aus der allgemeinen Fahrsituation ergebender Sollwert für die Verzögerung z. Der Fahrer wirkt in diesem Fall als Regler, der in Abhängigkeit von der Regeldifferenz entsprechend dem Block 702 das Bremspedal betätigt. Die Betätigung des Bremspedals führt entsprechend dem Block 703 unmittelbar unter Berücksichtigung des Bremsverhaltens des LKW zu einer Verzögerung $z_{LKW}$ des LKW. Weiterhin wird durch die Betätigung des Bremspedals die elektronische Steuerung 704 aktiviert, die einen anzusteuernden Sollwert für den Druck $p_{KKB}$ in Abhängigkeit der Betätigung des Bremspedals ausgibt. Zu diesem Sollwert wird zusätzlich ein Ausgangswert des Reglers 705 addiert. Dieser sich so ergebende Wert des Bresmdruckes $p_{KKB}$ führt dann entsprechend dem Block 706 zu einer Verzögerung $z_{Anh}$ des Anhängers. Außerdem wird die elektronische Steuerung 704 von dem Regler 705 unmittelbar beeinflußt, wenn ein stationärer Bremsvorgang vorliegt, indem die Zuordnung der Stellung des Bremspedals zu dem momentanen Wert des Druckes $p_{KKB}$ bei künftigen Bestimmungen eines anzusteuernden Sollwertes berücksichtigt wird. Entsprechend dem Block 707 kommt es zu einer Gesamtverzögerung z des Lastzuges, die der Fahrer als Istwert wahrnimmt. Außerdem treten bei unterschiedlichen Verzögerungen des Zugfahrzeuges und des Anhängers Koppelkräfte auf, die von dem Sensor 708 erfaßt werden und von einem Sollwert $F_{Kop,soll}$ subtrahiert werden, um dann dem Regler 705 als Eingangsgröße zugeführt zu werden.

## Patentansprüche

1. Verfahren zur Bestimmung eines momentan optimalen Druckes der Bremsen eines mit einem Zugfahrzeug verbundenen Anhängers oder Aufliegers im Sinne einer Anpassung der zwischen dem Zugfahrzeug und dem Anhänger bzw. Auflieger auftretenden Koppelkraft an die momentan vorliegenden Verhältnisse,

    **dadurch gekennzeichnet,**
    - daß bei wenigstens einem Bremsvorgang, bei dem sich die Koppelkraft $F_{Kop}$ auf einen vorgegebenen Sollwert $F_{Kop,soll}$ eingestellt hat (106), die Zuordnung des vor dem automatisch lastabhängigen Bremskraft-Ventil anstehenden Bremsdruckes $p_{ALB}$ der Bremsen des Zugfahrzeugs zu dem Druck $p_{KKB}$ am Kupplungskopf "Bremse" zwischen dem Zugfahrzeug und dem Anhänger bzw. Auflieger bestimmt wird,
    - daß aus ermittelten Zuordnungen von $p_{ALB}$ zu $p_{KKB}$ im Bereich von Werten des Druckes $P_{ALB}$ unterhalb des Ansprechdruckes des automatisch lastabhängigen Bremskraft-Ventils auf der Basis einer ersten Näherungsgeraden für die Abbremsung z des Zugfahrzeugs über Druckwerten $p_{ALB}$ unterhalb des Ansprechdruckes des automatisch lastabhängigen Bremskraft-Ventils mit einem Parameter $\mu_{1,LKW}$ für die Geradensteigung und einem Parameter $\beta_{1,LKW}$ für den Nullpunktsoffset und einer zweiten Näherungsgeraden für die Abbremsung z des Zugfahrzeugs über Druckwerten $p_{ALB}$ oberhalb des Ansprechdruckes des automatisch lastabhängigen Bremskraft-Ventils mit einem Parameter $\mu_{2,LKW}$ für die Geradensteigung und einem Parameter $\beta_{2,LKW}$ für den Nullpunktsoffset auf Zuordnungen von $P_{ALB}$ zu $P_{KKB}$ im Bereich von Werten des Druckes $p_{ALB}$ oberhalb des Ansprechdruckes des automatisch lastabhängigen Bremskraft-Ventils geschlossen wird, wie sie bei starken Bremsungen erforderlich sind bzw. auftreten, und
    - daß bei nachfolgenden Bremsvorgängen (103) der anzusteuernde Wert des Druckes $p_{KKB}$ der Bremsen des Anhängers bzw. Aufliegers aus der Zuordnung des Druckes $p_{ALB}$ der Bremsen des Zugfahrzeuges zu dem Druck $p_{KKB}$ (107) ermittelt wird.

2. Verfahren nach Anspruch 1,
    **dadurch gekennzeichnet,**
    daß zu dem anzusteuernden Wert des Druckes $p_{KKB}$ (704) eine solche Ausgangsgröße der Regelung (705) addiert wird, daß die Koppelkraft $F_{Kop}$ gleich ihrem Sollwert $F_{Kop,soll}$ wird.

3. Verfahren nach Anspruch 2,
    **dadurch gekennzeichnet,**
    daß keine Regelung der Koppelkraft $F_{Kop}$ erfolgt, wenn wenigstens eine der Bedingungen erfüllt ist:
    - das Fahrzeug befindet sich in Rückwärtsfahrt (601),
    - der aus dem Zugfahrzeug und dem Anhänger bestehende Lastzug steht (602),
    - seit Beginn des Bremsvorganges ist lediglich eine solche Zeitspanne vergangen, daß die am Beginn eines Bremsvorganges entstehende Koppelkraftspitze noch ansteht (603) und

- es handelt sich um einen schwachen Bremsvorgang (604).

4. Verfahren nach Anspruch 2 oder 3,
   **dadurch gekennzeichnet,**
   daß keine Regelung der Koppelkraft erfolgt, wenn eine Dauerbremsanlage in Betrieb ist (605).

5. Verfahren nach Anspruch 2 oder 3,
   **dadurch gekennzeichnet,**
   daß bei gleichzeitigem Betrieb einer Dauerbremsanlage und der Betriebsbremse (605, 606) nur die aufgrund der Betätigung der Betriebsbremse entstehende Koppelkraft $F_{Kop}$ ausgeregelt wird (607).

6. Verfahren nach einem der Ansprüche 2 bis 5,
   **dadurch gekennzeichnet,**
   daß der Regler ein PID-Verhalten aufweist.

7. Verfahren nach einem der Ansprüche 1 bis 6,
   **dadurch gekennzeichnet,**
   daß der Druck $p_{ALB}$ dem Druck $p_{KKB}$ unmittelbar zugeordnet wird.

8. Verfahren nach einem der Ansprüche 1 bis 6,
   **dadurch gekennzeichnet,**
   daß die die Größe des Druckes $p_{ALB}$ bestimmende Stellung $s_{BWG}$ des Bremswertgebers dem Druck $p_{KKB}$ zugeordnet wird.

9. Verfahren nach einem der Ansprüche 1 bis 8,
   **dadurch gekennzeichnet,**
   - daß der Druck $p_{ALB}$ so in einen Wert des Druckes $p_L$ umgerechnet wird, daß sich beim Auftragen der Verzögerung $z_{LKW}$ über dem Druck $p_L$ eine durchgehende Gerade ergibt,
   - daß zur Bestimmung eines anzusteuernden Wertes des Druckes $p_{KKB}$ aus wenigstens zwei Meßpunkten die Geradengleichung zwischen dem Druck $p_{KKB}$ und dem Druck $p_L$ bestimmt wird und
   - daß unter Verwendung der Zuordnung zwischen dem Druck $p_L$ und der Stellung $s_{BWG}$ des Bremswertgebers die Zuordnung der Stellung $s_{BWG}$ des Bremswertgebers zum Druck $p_{KKB}$ ermittelt wird (107),
   wenn die Koppelkraft $F_{Kop}$ gleich ihrem Sollwert $F_{Kop,soll}$ ist (106).

10. Verfahren nach Anspruch 9,
    **dadurch gekennzeichnet,**
    daß der Mindestabstand wenigstens zweier Meßpunkte für den Wert des Druckes $p_L$ größer als 1 bar ist (501).

11. Verfahren nach Anspruch 10,
    **dadurch gekennzeichnet,**
    - daß die Meßwerte zunächst in einzelne Bereiche bezüglich des Druckes $p_L$ aufgeteilt werden,
    - daß eine Mittelung der Meßwerte in den einzelnen Bereichen erfolgt (502) und
    - daß mittels der in den einzelnen Bereichen gemittelten Werte eine Bestimmung der Parameter der Geradengleichung vorgenommen wird (503).

12. Verfahren nach einem der Ansprüche 1 bis 11,
    **dadurch gekennzeichnet,**
    daß ein Reset der Zuordnungen der Werte des Druckes $p_{KKB}$ zu den Werten des Druckes $p_{ALB}$ bzw. zu den Stellungen $s_{BWG}$ des Bremswertgebers erfolgt, wenn der Lastzug länger als eine bestimmte Zeitdauer stillsteht.

13. Verfahren nach einem der Ansprüche 1 bis 11,
    **dadurch gekennzeichnet,**
    daß ein Reset der Zuordnungen der Werte des Druckes $p_{KKB}$ zu den Werten des Druckes $p_{ALB}$ bzw. zu den Stellungen $s_{BWG}$ des Bremswertgebers erfolgt, wenn der Motor des Lastzuges ausgeschaltet wird.

EP 0 485 738 B1

**Claims**

1.  Method of determining an instantaneously optimum pressure of the brakes of a trailer or semitrailer connected to a tractor for the purpose of adjusting the coupling force occurring betwen the tractor and the trailer or semitrailer to the conditions instantaneously present, characterised
    - in that during at least one braking process in which the coupling force $F_{Kop}$ has been set (106) to a pre-determined desired value $F_{Kop,desired}$, the assignment of the braking pressure $p_{ALB}$, present upstream of the automatically load-dependent braking force valve, of the brakes of the tractor with a pressure $p_{KKB}$ at the coupling head brake between the tractor and the trailer or semitrailer is determined,
    - in that from assignments pf $p_{ALB}$ to $p_{KKB}$ determined in the region of values of the pressure $p_{ALB}$ below the operating pressure of the automatically load-dependent braking force valve, on the basis of a first approximation line for the deceleration z of the tractor over pressures values $p_{ALB}$ below the operating pressure of the automatically load-dependent braking force valve having a parameter $\mu_{1,LKW}$ for the line gradient and a parameter $\beta_{1,LKW}$ for the zero-point offset and of a second approximation line for the deceleration z of the tractor over pressure values $p_{ALB}$ above the operating pressure of the automatically load-dependent braking force valve having a parameter $\mu_{2,LKW}$ for the line gradient and a parameter $\beta_{2,LKW}$ for the zero-point offset a conclusion is drawn regarding assignments of $p_{ALB}$ to $P_{KKB}$ in the region of values of the pressure $p_{ALB}$ above the operating pressure of the automatically load-dependent braking force valve, as they are necessary or occur in instances of strong braking, and
    - in that during subsequent braking processes (103) the target value of the pressure $p_{KKB}$ of the brakes of the trailer or semitrailer is determined from the assignment of the pressure $p_{ALB}$ of the brakes of the tractor to the pressure $p_{KKB}$ (107).

2.  Method according to Claim 1, characterised in that there is added to the target value of the pressure $p_{KKB}$ (704) an output variable of the regulation (705) such that the coupling force $F_{Kop}$ becomes equal to its desired value $F_{Kop,desired}$.

3.  Method according to claim 2, characterised in that no regulation of the coupling force $F_{Kop}$ is performed when at least one of the conditions is fulfilled:
    - the vehicle is driving backwards (601),
    - the road train consisting of the tractor and the trailer is stationary (602),
    - from the start of the braking process only a time interval has elapsed such that the peak coupling force arising at the start of a braking process is still present (603), and
    - the braking process (604) is a weak one.

4.  Method according to Claim 2 or 3, characterised in that no regulation of the coupling force is performed if a retarding unit is in operation (605).

5.  Method according to Claim 2 or 3, characterised in that in the event of simultaneous operation of a retarding unit and the service brake system (605, 606) only the coupling force $F_{Kop}$ arising owing to the actuation of the service brake system is stabilised (607).

6.  Method according to one of Claims 2 to 5, characterised in that the controller has a PID action.

7.  Method according to one of Claims 1 to 6, characterised in that the pressure $p_{ALB}$ is directly assigned to the pressure $p_{KKB}$.

8.  Method according to one of Claims 1 to 6, characterised in that the position $s_{BWG}$, determining the magnitude of the pressure $p_{ALB}$, of the braking value sensor is assigned to the pressure $p_{KKB}$.

9.  Method according to one of Claims 1 to 8, characterised in that
    - the pressure $p_{ALB}$ is converted into a value of the pressure $p_L$ in such a way that a continuous straight line results when the retardation $z_{LKW}$ is plotted against the pressure $p_L$,
    - in order to determine a target value of the pressure $p_{KKB}$ the straight line equation between the pressure $p_{KKB}$ and the pressure $p_L$ is determined from at least two measuring points, and

10

- the assignment of the position $s_{BWG}$ of the braking value sensor to the pressure $p_{KKB}$ is determined (107) using the assignment between the pressure $p_L$ and the position $s_{BWG}$ of the braking value sensor,

when the coupling force $F_{Kop}$ is equal to its desired value $F_{Kop,desired}$ (106).

10. Method according to Claim 9, characterised in that the minimum distance between at least two measuring points for the value of the pressure $p_L$ is greater than 1 bar (501).

11. Method according to Claim 10, characterised in that
   - the measured values are firstly subdivided into individual ranges with regard to the pressure $p_L$,
   - an averaging of the measured values in the individual ranges is performed (502), and
   - a determination of the parameters of the straight line equation is undertaken (503) by means of the values averaged in the individual ranges.

12. Method according to one of Claims 1 to 11, characterised in that a reset of the assignments of the values of the pressure $p_{KKB}$ to the values of the pressure $p_{ALB}$ or to the positions $s_{BWG}$ of the braking value sensor is performed when the road train is stationary for longer than a specific duration.

13. Method according to one of Claims 1 to 11, characterised in that a reset of the assignments of the values of the pressure $p_{KKB}$ to the values of the pressure $p_{ALB}$ or to the positions $s_{BWG}$ of the braking value sensor is performed when the engine of the road train is switched off.

**Revendications**

1. Procédé de détermination de la pression de freinage optimale instantanée d'une remorque ou d'une semi-remorque accouplée à un véhicule tracteur dans le but d'adapter aux conditions instantanées existantes la force d'accouplement qui s'exerce entre le véhicule tracteur et la remorque ou la semi-remorque,
   caractérisé en ce que
   la correspondance entre la pression de freinage $p_{ALB}$ des freins du véhicule tracteur, présente avant la vanne de force de freinage commandée automatiquement par la charge, et la pression $p_{KKB}$ présente à la tête d'accouplement "freins" entre le véhicule tracteur et la remorque ou la semi-remorque est définie lors d'au moins un processus de freinage au cours duquel la force d'accouplement $F_{kop}$ doit être réglée (106) à une valeur de consigne prédéterminée $F_{kop,soll}$,
   en ce que des correspondances entre $p_{ALB}$ et $p_{KKB}$ dans des zones des valeurs de la pression $p_{ALB}$ supérieures à la pression de réponse de la vanne de force de freinage commandés automatiquement par la charge, comme celles qui sont nécessaires et sont appliquées lors de forts freinages, sont déduites de correspondances déterminées entre $p_{ALB}$ et $p_{KKB}$ dans des zones des valeurs de la pression $p_{ALB}$ inférieures à la pression de réponse de la vanne de force de freinage commandée automatiquement par la charge sur la base d'une première droite d'approximation qui concerne la décélération $z$ du véhicule tracteur sous l'effet de valeurs de pression $p_{ALB}$ inférieures à la pression de réponse de la vanne de force de freinage commandée automatiquement par la charge, dont les paramètres sont $\mu_{1,LKW}$ pour la pente de la droite et $\beta_{1,LKW}$ pour l'ordonnée à l'origine, et d'une deuxième droite d'approximation concernant la décélération $z$ du véhicule tracteur sous l'effet de valeurs de pression $p_{ALB}$ supérieures à la pression de réponse de la vanne de force de freinage commandés automatiquement par la charge, dont les paramètres sont $\mu_{2,LKW}$ pour la pente de la droits et $\beta_{2,LKW}$ pour l'ordonnée à l'origine.
   en ce que la valeur de la pression $p_{KKB}$ à appliquer aux freins de la remorque ou de la semi-remorque est déterminée, lors de processus suivants de freinage (103), à partir de la correspondance entre la pression $p_{ALB}$ des freins du véhicule tracteur et la pression $p_{KKB}$ (107).

2. Procédé selon la revendication 1,
   caractérisé en ce que
   une valeur initiale du réglage (705) telle que la force d'accouplement $F_{KOP}$ devient égale à sa valeur de consigne $F_{KOP,SOLL}$ est additionnée à la valeur de la pression $p_{KKB}$ (704) à appliquer.

3. Procédé selon la revendication 2,
   caractérisé en ce que

aucun réglage de la force d'accouplement n'est effectué lorsqu'au moins l'une des conditions suivantes est satisfaite:

- le véhicule se déplace en marche arrière (601),
- le train routier constitué par le véhicule tracteur et la remorque est à l'arrêt,
- depuis le début du processus de freinage, il ne s'est écoulé qu'un espace de temps tel que la pointe de force d'accouplement qui apparaît au début d'un processus de freinage est encore présente (603), et
- il s'agit d'un processus de freinage faible (604).

4. Procédé selon la revendication 2 ou 3,
caractérisé en ce que
aucun réglage de la force d'accouplement n'est effectué lorsqu'une installation de freinage continu est en fonctionnement (605).

5. Procédé selon la revendication 2 ou 3,
caractérisé en ce que
lors du fonctionnement simultané d'une installation de freinage continu et du frein de service (605, 606), seule la force d'accouplement $F_{KOP}$ qui résulte de l'actionnement du frein de fonctionnement est prise en compte pour le réglage (607).

6. Procédé selon l'une des revendications 2 à 5,
caractérisé en ce que
le régulateur présente un comportement PID.

7. Procédé selon l'une des revendications 1 à 6,
caractérisé en ce que
la correspondance entre la pression $p_{ALB}$ la pression $p_{KKB}$ est immédiate.

8. Procédé selon l'une des revendications 1 à 6, caractérisé en ce que la position $S_{BWG}$ de l'indicateur de freinage qui définit la valeur de la pression $p_{ALB}$ correspond à la pression $p_{KKB}$.

9. Procédé selon l'une des revendications 1 à 8, caractérisé en ce que
la pression $p_{ALB}$ est transformée en une valeur de la pression $p_L$ d'une manière telle que le résultat du tracé de la décélération $z_{LKW}$ en fonction de la pression $p_L$ est une droite continue,
en ce que l'équation linéaire entre la pression $p_{KKB}$ et la pression $p_L$ est définie à partir d'au moins deux points de mesure pour définir une valeur de la pression $p_{KKB}$ à commander,
en ce que la correspondance entre la position $S_{BWG}$ de l'indicateur de freinage et la pression $p_{KKB}$ est déterminée en utilisant la correspondance entre la pression $p_L$ et la position $S_{BWG}$ de l'indicateur de freinage,
lorsque la force de l'accouplement $F_{KOP}$ est égale à sa valeur de consigne $F_{KOP,SOLL}$ (106).

10. Procédé selon la revendication 9,
caractérisé en ce que
la distance minimale entre au moins deux points de mesure destinés à la valeur de la pression $p_L$ est supérieure à 1 bar (501).

11. Procédé selon la revendication 10,
caractérisé en ce que
les valeurs de mesure sont d'abord réparties dans des zones individuelles en ce qui concerne la pression $p_L$,
en ce qu'une moyenne des valeurs de mesure est calculée dans chacun des domaines individuels (502) et
en ce qu'une définition des paramètres de l'équation linéaire est réalisée (503) à l'aide des valeurs moyennes calculées dans les zones individuelles.

12. Procédé selon l'une des revendications 1 à 11,
caractérisé en ce que
une restauration des correspondances entre les valeurs de la pression $p_{KKB}$ et les valeurs de la pression $p_{ALB}$ ou les positions $S_{BWG}$ de l'indicateur de freinage est réalisée lorsque le train routier est à l'arrêt pendant un temps supérieur à une durée déterminée.

13. Procédé selon l'une des revendications 1 à 11,
caractérisé en ce que
une restauration des correspondances entre les valeurs de la pression $p_{KKB}$ et les valeurs de la pression $p_{ALB}$ ou les positions $S_{BWG}$ de l'indicateur de freinage est réalisée lorsque le moteur du train routier est arrêté.

Fig.1

Fig. 2

Fig. 3

# Fig. 4

# Fig. 5

501    $\Delta P_{ALB} > 1\,bar$    n

j

502    Bereiche mitteln

503    Gerade berechnen

*Fig.6*

601 $V_F > 0$

602 $V_F == 0$

603 $t_{Brems}$

604 $P_{KKB} > P_{KKB, Schwelle}$

605 Dauer-bremsanlage

606 Betriebs-bremsanlage

607 GL.(8)

608 PID

# Fig. 7

① Bremsverhalten LKW
② Bremsverhalten Anh.